(19) **Europäisches Patentamt / European Patent Office / Office européen des brevets**

(11) **EP 1 851 095 B1**

(12) **EUROPEAN PATENT SPECIFICATION**

(45) Date of publication and mention
of the grant of the patent:
**25.03.2015 Bulletin 2015/13**

(51) Int Cl.:
***B60T 8/00*** (2006.01)

(21) Application number: **05716811.4**

(22) Date of filing: **25.02.2005**

(86) International application number:
**PCT/EP2005/050820**

(87) International publication number:
**WO 2006/089590 (31.08.2006 Gazette 2006/35)**

(54) **AUTOMATIC BRAKING CONTROL SYSTEMS AND METHOD FOR OPERATING THE SYSTEM**

AUTOMATISCHE BREMSREGELUNGSSYSTEME UND VERFAHREN ZU IHREM BETRIEB

SYSTEMES ET PROCEDE DE COMMANDE AUTOMATIQUE DE FREINAGE POUR VEHICULE

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**07.11.2007 Bulletin 2007/45**

(73) Proprietor: **Freni Brembo S.p.A.**
**24035 Curno (Bergamo) (IT)**

(72) Inventors:
- **CANTONI, Carlo**
  **I-24020 Gorle (IT)**
- **SAVARESI, Sergio**
  **I-26100 Cremona (IT)**
- **CHARALAMBAKIS, Demos**
  **c/o FRENI BREMBO S.p.A.**
  **24035 Curno (Bergamo) (IT)**
- **TANELLI, Mara**
  **I-26900 Lodi (IT)**

(74) Representative: **Leihkauf, Steffen Falk et al**
**Jacobacci & Partners S.p.A.**
**Via Senato 8**
**20121 Milano (IT)**

(56) References cited:
EP-A- 0 636 526      DE-A1- 2 208 936
DE-A1- 10 141 548      DE-A1- 10 259 271
DE-A1- 19 926 672

## Description

The present invention refers to an automatic braking control system for vehicles. As an example, the present invention relates to a braking control system suitable to perform an anti-lock control of the vehicle wheels.

Most of the modern road vehicles are equipped with an electronic automatic braking control system which can greatly improve the safety of a vehicle in extreme circumstances, since it can maximize the longitudinal tire-road friction, while preventing lateral forces from going to zero.

The traditional automatic braking control systems are closed-loop control systems using the wheel deceleration as controlled variable. Notwithstanding the fact that the wheel deceleration can be easily measured, a regulation loop closed on the wheel deceleration may be critical if the road-surface rapidly changes. Henceforth, deceleration-based control strategies require the on-line estimation of road-tire friction characteristics.

Another type of automatic braking control system employs a regulation of the wheel longitudinal slip which is simpler from the dynamical point of view, and the slip set-point does not require on-line adaptation. However, the main drawback of slip-control is that the accurate measurement of the longitudinal slip is critical. An example of this type of system is described in DE 199 26 672.

It is an object of the present invention to provide an automatic braking control system alternative to the known ones that, for example, shows, with respect to the known ones, performances less critically dependent on the wheel slip measurement reliability.

The above mentioned object is achieved by an automatic braking control system as defined by the appended claim 1. Preferred embodiments of said automatic braking control system are defined by the appended dependent claims 2-19. Moreover, the present invention also refers to a method for operating an automatic braking control system as defined by the annexed claim 20. Preferred embodiments of said method are defined by the appended dependent claims 21-34.

The characteristics and the advantages of this invention will become evident from the following description of preferred embodiments when taken in conjunction with the accompanying drawings wherein.

- figure 1 shows schematically and by means of functional blocs an example of automatic braking control system, according to the invention;
- figure 2 shows schematically an example of a control block employable in said system;
- figure 3 shows schematically an example of a estimation and processing block employable in said system;
- figure 4 shows a simplified and general structure of the control scheme of the invention;
- figure 5 shows the shape of the wheel friction as a function of the longitudinal wheel slip in different road conditions;
- figure 6 shows different behaviors of the magnitude of the frequency response of the closed-loop sensitivity function, for different values of the design parameters of said control scheme;
- figure 7 shows the residual closed-loop output noise in different operating conditions of a control scheme.

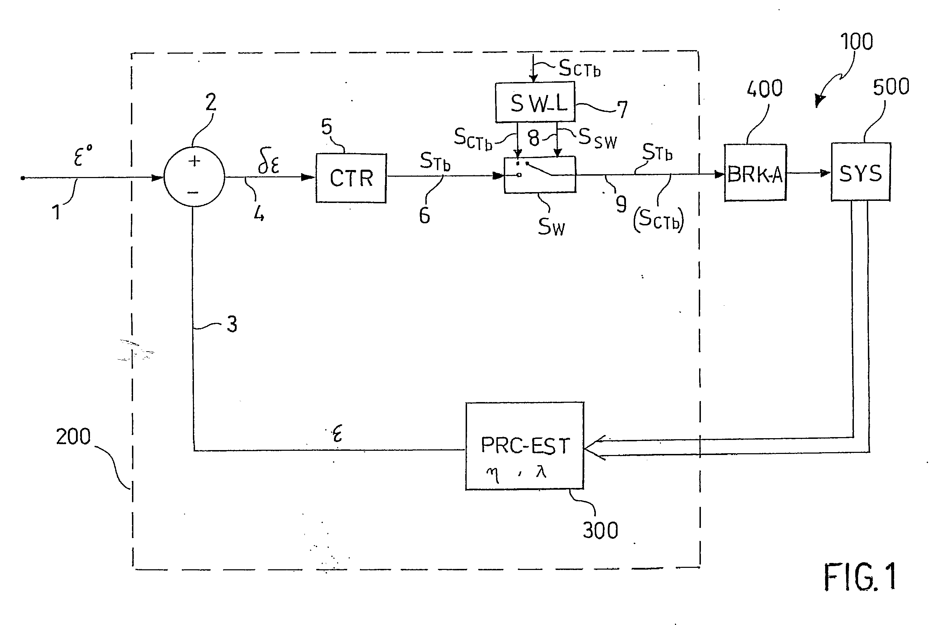

Figure 1 shows, by means of functional blocks, an automatic braking control system 100 realized according to one embodiment of the invention. The automatic braking control system 100 can be installed on vehicles, such as, ground vehicles (e.g. cars, motorcycles, trucks, agricultural vehicles) and aircrafts. The automatic braking control system 100 of figure 1 includes an electronic control module 200, a estimation and processing block 300 (PRC-EST) and a braking apparatus 400 acting on a wheel of a vehicle. In figure 1, the vehicle, provided with its respective number of wheels, has been schematized by a system block 500 (SYS) operatively connected to the braking apparatus 400. According to a particular example, the system 100 is suitable to perform an anti-lock braking control of a vehicle wheel and, preferably, to manage the overall braking maneuver so to maximize passengers safety and comfort.

The control module 200 is associated to one of the vehicle wheels and, advantageously, the other wheels are provided with respective modules (e.g. analogous to the module 200) for controlling the corresponding braking apparatuses. Moreover, it has to be observed that the blocks included in the control module 200 shown in figure 1 are descriptive of the corresponding function performed and not exclusively of corresponding hardware stages. In fact, the whole control module 200 may be, preferably, implemented by software modules embedded into either a vehicle or a wheel processing module (e.g. the known Electronic Control Unit, ECU, of the vehicle or the wheel) executing instructions corresponding to the processing steps described herein below with reference to the blocks of the figures.

The control module 200 comprises a first input terminal 1, for a reference electrical signal $\varepsilon°$, connected to a first node 2 for performing (or computing) the difference between the reference signal $\varepsilon°$ and a controlled signal $\varepsilon$ which can be fed to the first node 2 by means of a second terminal 3. The first node 2 is electrically connected to a third terminal 4 for carrying an error signal $\delta\varepsilon$, representative of the difference between the reference $\varepsilon°$ and the controlled $\varepsilon$ signals: $\delta\varepsilon = (\varepsilon - \varepsilon°)$.

The third terminal 4 is connected to a control block 5 (CTR) having an input terminal connected to the third terminal 4 so as to receive as input the error signal $\delta\varepsilon$ and a first output terminal 6 for carrying an output signal $S_{Tb}$ to be fed to the braking apparatus 400 and representative of a control variable corresponding to a proper physical quantity. According to the described embodiment of the invention, the output signal $S_{Tb}$ is representative of the mechanical braking torque Tb which has to be applied by an actuator of the braking apparatus.

The control block 5 is, advantageously, of the modulating type. As clear to the skilled person a modulating controller produces a control quantity (i.e. the output of the controller) that is continuously variable. As it is well known, a modulating controller can be described as a dynamical system mathematically described either in continuous or discrete time domain. The modulating controllers are different from the logic controllers wherein the output control variable varies in a discrete manner and which can be described as discrete events systems. In such logic controllers, the output control variable can assume a very limited number of values; such logic controllers are commonly referred to also as rule or threshold-based controllers.

With reference to the present case, as an example, the control block 5 is a digital block and the output signal $S_{Tb}$ is a discrete time signal. As an example, the output signal $S_{Tb}$ may assume at least 32 levels and can be represented by a binary number of at least 5 bits. Notwithstanding this discrete-time implementation, the design of the control block 5 is made in accordance with the synthesis methodologies pertaining to a modulating controller design and not with the ones typical of a logic controller.

The control block 5 is configured for producing an output signal $S_{Tb}$ that reduces the error signal $\delta\varepsilon$ and, preferably, is a proportional-integral-differential controller PID. The transfer-function of the control block 5 is dependent on parameters related to the specific kind of wheel and vehicle on which the brake apparatus 400 acts (as an example, it has to be noticed that front and rear wheels exhibit different dynamic behavior) and the specific actuating means related to the internal technology of the braking apparatus 400. An example of transfer-function of the control block 5 will be described in another section of the present description.

Advantageously, the control module 200 is also provided with a switching-logic block 7 (SW-L), connected to a switch apparatus SW, for selectively connecting/disconnecting the braking apparatus 400 to/from the first output terminal 6 and to/from a command terminal carrying a command signal $S_{cTb}$ representative of the torque requested by a vehicle driver to the braking apparatus 400. The command signal $S_{cTb}$ is thus representative of the torque requested to the braking apparatus 400 directly by the driver and, therefore, which is not subjected to a control procedure. In other words, the switching-logic block 7 allows to disconnect the control module 200 from the braking apparatus 400, which will then be driven by the command signal $S_{cTb}$ which is in a proportionality relation to the pressure exerted on the brake-pedal by the vehicle driver.

The switching-logic block 7 drives the switch apparatus SW by means of the switching command signal $S_{Sw}$. The switching-logic block 7 can be configured to connect the braking apparatus 400 to the control module 200 only in particular ride conditions such as, for example, for values of the wheel longitudinal slip which exceed a pre-defined threshold.

The switch apparatus SW is provided with a second output terminal 9 carrying the output signal $S_{Tb}$ or the command signal $S_{cTb}$, on the basis of the status of the switching-logic block 7. The second output terminal 9 is connected to the braking apparatus 400.

Particularly, the braking apparatus 400 is designed according to the brake-by-wire technology. As it is clear to the skilled person, in a braking apparatus for brake-by-wire automotive applications, the actuating unit of the apparatus is operatively coupled to the pedal on which the drivers exerts the pressure by electrical signals carried by corresponding wirings and not by mechanical or hydraulic coupling physical connections.

As an example, the brake-by-wire apparatus 400 is an electro-mechanical brake and it includes an electrical motor (e.g. a brushless motor, not shown) for actuating the mechanical brake-unit of the apparatus. Alternatively, the brake-by-wire apparatus is of the electro-hydraulic type and it includes an electrically-driven pump (not shown) for actuating a hydraulic circuit (not shown) of the braking apparatus. The brake-unit (not shown) of the braking apparatus 400 my be a conventional disk brake (normally, provided with a brake caliper) or a conventional drum brake.

The signal applied to the second output 9 and entering the braking apparatus 400 is converted by the apparatus itself in the physical quantity necessary to the specific brake-unit employed to perform the braking action on the corresponding wheel. According to the described example, said physical quantity is the braking torque actuated by the brake caliper.

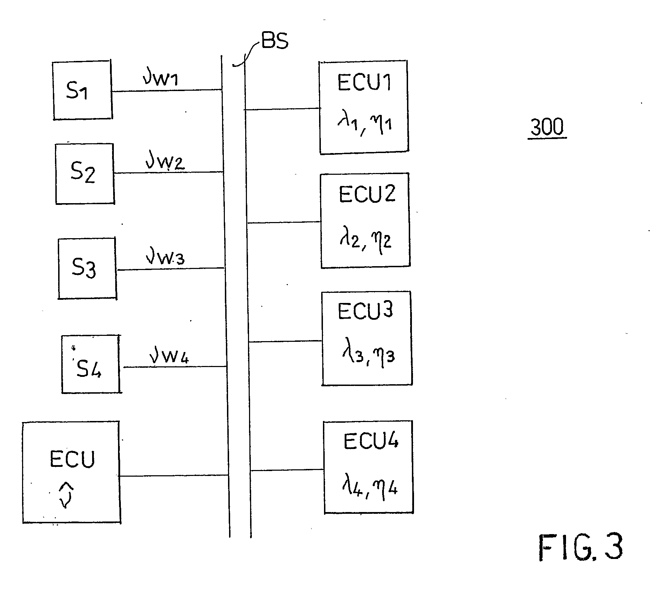

A particular embodiment of the estimation and processing block 300 will be described later, with reference to figure 3. However, the estimation and processing block 300 is able to perform measures of particulars quantities on the wheels of the vehicle system 500, estimate a longitudinal slip ($\lambda$) and compute a linear deceleration ($\eta$) of the wheel connected to the braking apparatus 400.

Moreover, the processing and estimation block 300 is able to process the two above mentioned quantities or, more particularly, is so as to process a wheel slip signal $\lambda$ (representative of the estimated longitudinal slip) and a wheel deceleration signal $\eta$ (representative of the computed linear deceleration). This processing allows to obtain the controlled signal $\varepsilon$.

Particularly, the controlled signal $\varepsilon$ is a linear combination of the wheel slip signal $\lambda$ and the wheel deceleration signal η. More particularly, said linear combination is performed according to a first weight applied to the slip signal λ and a second weight applied to the deceleration signal η, wherein the first and second weight are different from 0 and are, as an example, different from each other.

According to a particular embodiment of the invention, said combination is a convex combination. In this case, the controlled ε signal generated by the estimation and processing block 300 may be expressed by the following relation:

$$\varepsilon = \alpha\lambda + (1-\alpha)\eta \quad , \quad \alpha \in [0,1] \qquad (a)$$

wherein α is a coefficient comprised in the range [0, 1], different from 0 and 1. The coefficient α and the coefficient 1-α are an example of the above mentioned first and second weights, respectively. For example, the coefficient α is comprised between [0.01 , 0.99] and, preferably, α is comprised between [0.5 , 0.99]. A more preferable value of α is 0.6.

In case that the convex combination of the relation (a) is employed, the reference signal ε° can be expressed as:

$$\varepsilon^{o} = \alpha\lambda^{o} + (1-\alpha)\eta^{o} \quad , \qquad (b)$$

where the quantities λ° and μ° are pre-defined values.

Coming back to the control block 5, its transfer function is dependent on the dynamic of the system 500 including the concerned wheel. As an example, by using the well known quarter-car model the whole system 500 can be represented by the following transfer function:

$$G_{\varepsilon}(s) = \dfrac{\dfrac{(1-\alpha)r}{Jg}\left(s + \dfrac{g}{v}\left[\dfrac{\alpha}{1-\alpha} + \left(\mu_1(\overline{\lambda})(1-\overline{\lambda}) - \mu(\overline{\lambda})\right)\right]\right)}{s + \left[\dfrac{1}{v}\left(g\mu_1(\overline{\lambda})\left((1-\overline{\lambda}) + \dfrac{mr^2}{J}\right) - g\mu(\overline{\lambda})\right)\right]} \qquad (c)$$

wherein

- *J* is the momentum of inertia of the wheel;
- *m* is the quarter-car mass,
- *r* is the radius of the wheel;
- $v$ is the longitudinal vehicle speed;
- $\mu(\overline{\lambda})$ is the longitudinal friction coefficient;
- *g* is the gravitational acceleration;
- $\mu_1(\overline{\lambda})$ is defined as $\mu_1(\overline{\lambda})=\partial\mu(\lambda)/\partial\lambda|_{\lambda=\overline{\lambda}}$ (notice that $\overline{\lambda}$ indicates the equilibrium point about which the system model has been linearized).

Further explanations on the system and on its model will be given in an APPENDIX of the present description. The exemplificative transfer function of relation (c), describes the dynamic relation between the controlled variable ε and the braking torque Tb (i.e. the actual value of the torque exerted by the actuator of the braking apparatus on the brake-unit).

The discrete counterpart of the function expressed by the relation (c) (obtained with via the relation $s = \dfrac{z-1}{Tz}$ , i.e. via the Backward Euler method) is:

$$G_{\varepsilon}(z) = k \cdot \dfrac{(1+aT)\cdot z - 1}{(1+bT)\cdot z - 1} , \qquad (d)$$

where

$$a = \dfrac{g}{v}\left[\dfrac{\alpha}{1-\alpha} + \left(\mu_1(\overline{\lambda})(1-\overline{\lambda}) - \mu(\overline{\lambda})\right)\right] ,$$

$$b = \left[ \frac{1}{v} \left( g\mu_L(\overline{\lambda}) \left( (1-\overline{\lambda}) + \frac{mr^2}{J} \right) - g\mu(\overline{\lambda}) \right) \right],$$

$$k = \frac{(1-\alpha) \cdot r}{Jg},$$

and T is the sampling time, which, for most common vehicle bus architectures is 0.005s.

In accordance with the above indicated relations, the control block 5 can be designed in order to have the following transfer function R(s):

$$R(s) = K_{1an} \frac{1 + a_{1an}s}{s} R_{ACT}(s) \qquad (e)$$

where the $K_{1an}$ and $a_{1an}$ are design parameters to be appropriately tuned and which may take different values for front and rear wheels, and $R_{ACT}(s)$ is a filter which has to be designed according to the dynamic behaviour of actuator of the braking apparatus 400.

The discrete transfer function of the controller block 5 has the following structure:

$$R(z) = K_{1dig} \frac{a_{1dig}z - 1}{z - 1} R_{ACT}(z) \qquad (f)$$

where $K_{1dig}$ and $a_{1dig}$ are design parameters to be appropriately tuned and which may take different values for front and rear wheels, and $R_{ACT}(z)$ is the discrete counterpart of the filter $R_{ACT}(s)$.

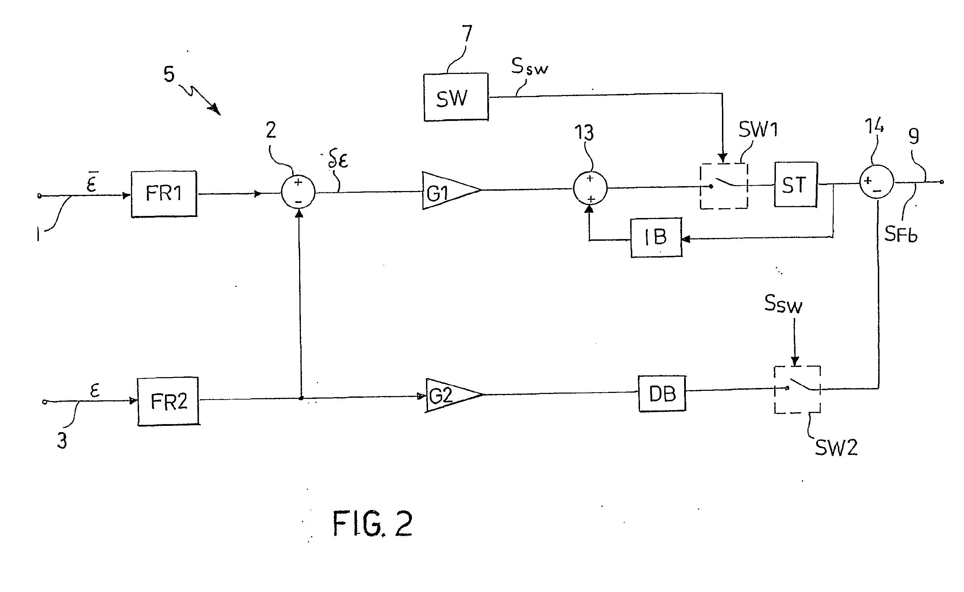

A particular embodiment of the control block 5 and its interaction with the switching block 7 is schematically shown in figure 2. As an example, the control block 5 implements the transfer function expressed by the relation (f).

The control block 5, schematically illustrated in figure 2, is a proportional-integral-derivative controller and shows a structure that is clear to the skilled person. The block 5 first stage FR1 interposed between the first terminal 1 (carrying the reference electrical signal ε° the first node 2 which provides the error signal δε. The second terminal 3 (carrying the control signal ε) is connected to the first node 2 by means of an interposed second filtering stage FR2.

The first and second filtering stages FR1 and FR2 are, as an example, identical to each other and are represented by the transfer function $R_{ACT}(z)$ above indicated in relation (f). The control block 5 also comprises two gain stages G1 and G2 both introducing the proportional factor Kp.

Moreover, the control block 5 includes a integral block IB, having, for example, the following discrete transfer function $G_I(z)$:

$$G_I(z) = \frac{T z}{(T_i + T)(z - T_i)} \qquad (g)$$

where T is the sampling time and $T_i$ is time constant of the integral action.

The derivative action of the control block 5 is performed by a derivative block DB, having, for example, the following discrete transfer function $G_D(z)$:

$$G_I(z) = \frac{T_d (z - 1)}{(\frac{T_d}{N} + T)(z - \frac{T_d}{N})} \qquad (h)$$

where $T_d$ is the is time constant of the derivative action, N is a positive design parameter.

The parameters included in the relations (g) and (h) can be easily determined in such a way that the control block 5 shows a transfer function substantially equal to the one given in (f).

The integral block IB is inserted in a feedback branch and its output is connected to a second node 13 (e.g. an addition node) for adding the signal exiting the integrative block IB to the one produced by the gain block G1. The signal exiting the adding node 13 is fed to a saturation block ST that limits the amplitude of this signal.

The signal produced by the derivative block DB and the one exiting the saturation block ST are combined in a third node 14 (e.g. a node performing a difference) in order to provide ,on the second output terminal 9, the signal (e.g. signal $S_{Tb}$) to be applied to the braking apparatus 400.

The possibility of disconnecting the control block 5 from the braking apparatus is implemented by the embodiment of figure 2 by means of two switching devices SW1 (connected at the output of the second node 13) and SW2 (connected at the output of the derivative block DB). The switching devices SW1 e SW2 are driven by a driving signal $S_{SW}$ provided by the switching block 7.

Figure 3 shows schematically a particular embodiment of the processing and estimation block 300 which comprises a plurality of sensors S1-S4 associated with each vehicle wheel for measuring a corresponding plurality of wheel speeds and generating the respective speed signals $v_{w1}$-$v_{w4}$ (e.g. in digital form). Each sensor of the plurality S1-S4 can include a known speed sensor (e.g. a Hall-effect encoder), connected to an electronic circuit board (not shown).

The plurality of sensors S1-S4 are connected to a corresponding plurality of elaborating units such as the four wheel electronic control units ECU1-ECU4, normally provided on a vehicle such as a car. The sensors S1-S4 may exchange information/command by means of a bus BS such as the conventional TTP (Time Triggered Protocol) bus. In addition, the estimation and processing block 300 comprises a vehicle elaborating unit ECU which is able to estimate on the basis, for example, of the four speed signals $v_{w1}$-$v_{w4}$, the estimated speed $\hat{v}$ of the vehicle (e.g. a car).

The vehicle elaborating unit ECU may be the conventional vehicle electronic control unit, normally provided on the vehicle to perform control functions. According to example, the vehicle electronic control unit ECU may perform the estimation of the vehicle speed $\hat{v}$ by implementing an estimation algorithm known to the expert and, as an example, based also on the measure of the vehicle longitudinal acceleration. In this particular case, the vehicle is also provided with an acceleration sensor (not shown).

Each wheel electronic control unit ECU1-ECU4 is able to compute the corresponding longitudinal wheel slip $\lambda_i$ on the basis of the following relation:

$$\lambda_i = \frac{\hat{v} - v_{wi}}{\hat{v}}, \qquad i = 1, \dots, n_{wh}, \tag{i}$$

Where:

- $\hat{v}$ is the estimated vehicle speed;
- $v_{wi}$ is the i-th wheel speed;
- $n_{wh}$ is the vehicle number of wheels.

Moreover, each wheel electronic control unit ECU1-ECU4 computes each linear wheel deceleration $\eta_i$ evaluating the numerical derivative of the corresponding wheel speed. As an example, the quantities slip $\lambda_1$ and deceleration $\eta_1$ are the quantities above indicated with the symbols $\lambda$ and $\eta$ referred to the first vehicle wheel.

With reference to the wheel associated to the respective wheel control unit ECU1, such unit processes the slip signal $\lambda$ and the deceleration signal $\eta$ in order to obtain the controlled signal $\varepsilon$ according, for example, to expression (a).

It has to be observed that all the processing functions associated with the control block 5 (for example, in the embodiment of figure 2), the first node 2, the switching-logic block 7 can be implemented by software procedures acting on digital data, executed by the wheel control unit ECU1. Moreover, for the purposes of the present invention the terms modules, blocks, stages and units have been used for defining hardware elements, or software elements or hardware elements programmed by suitable software.

The operation of the system 100 is the following.

The sensors S1-S4 of the estimation and processing block 300 (figure 3) measure the wheel speeds and generate respective speed signals $v_{w1}$-$v_{w4}$ sent to the bus BS. The vehicle electronic control unit ECU processes the speed signals $v_{w1}$-$v_{w4}$ and estimates the vehicle speed $\hat{v}$ according to the pre-defined estimation algorithm.

Moreover, each wheel electronic control units ECU1-ECU4 processes the wheel speed signals $v_{w1}$-$v_{w4}$ and the estimated vehicle speed $\hat{v}$ to provide the corresponding wheel deceleration signal and wheel slip signal.

With reference to only one of the vehicle wheels, the control unit ECU1 elaborates the pertinent deceleration signal $\eta$ and the slip signal $\lambda$ (for example according to the relation (a)) and generates the controlled signal $\varepsilon$. The generation of the deceleration signal $\eta$ and the slip signal $\lambda$ is performed at a sampling frequency, for example, equal to 200 Hz.

The controlled signal $\varepsilon$ is processed by the first node 2 which computes the difference between the controlled signal $\varepsilon$ and the reference signal $\varepsilon^0$ and, thus, outputs the error signal $\delta\varepsilon$. The control block 5 processes (i.e. filters) the error signal δε in order to produce an output signal S<sub>Tb</sub> able to substantially reduce or nullify the error signal δε.

When the automatic braking control system 100 is enabled, the switching-logic SW-L allows the output signal $S_{Tb}$ to be applied to the braking apparatus 400. Therefore, the braking apparatus 400 operates based on the output signal $S_{Tb}$ and not based on the command signal $S_{cTb}$ representative of the braking torque requested by the vehicle driver acting on the pedal brake.

According to the particular example considered, the output signal $S_{Tb}$ is computed according to both the estimated value of the wheel slip and of the computed wheel deceleration, and it is able to substantially prevent the wheel from locking during a braking manoeuvre.

Software simulations, based on experimental measurements proved that the automatic braking control 100 implemented according to the invention shows relevant advantages. Particularly, the use of a mixed slip-deceleration control (i.e. the construction of the controlled quantity (ε) on the basis of both the variables wheel deceleration and wheel slip) allows to take advantage of the superior characteristics of the slip-control (in comparison with the wheel deceleration-control), while strongly reducing the limitation of the slip-control connected to the need of accurate and reliable wheel slip measurements.

Moreover, the use of a controlled quantity that takes into account both slip and deceleration together with the use of a modulating control (as the one performed by the control block 5) allows to obtain better dynamic performances compared to the logic controllers, as the modulating control allows to effectively drive the actuator, thereby fully exploiting its capabilities and maximizing its performance.

For sake of completeness, an Appendix containing further explanations concerning the theoretical aspects on the inventions and illustrating simulations made has been reported herein below.

APPENDIX

1. SYSTEM DESCRIPTION

For the design and testing of braking control algorithms, a simple but effective quarter-car model is typically used. The model is given by the following equations

$$\begin{cases} J\dot{\omega} = rF_x - T_b \\ m\dot{v} = -F_x \end{cases} \qquad (1)$$

In (1), ω is the angular speed of the wheel; $v$ is the longitudinal speed of the vehicle; $T_b$ is the braking torque; $F_x$ is the longitudinal road-tire contact force; J, *m and* r are the momentum of inertia of the wheel, the quarter-car mass, and the wheel radius, respectively.

Throughout the APPENDIX, the normalized linear wheel deceleration η=-ω̇r/g will be used. Observe that η is the linear deceleration (expressed in *[m/s²])* of the contact point of the tire, normalized with respect to the gravitational acceleration g. It is particularly useful since it can be easily compared with the vehicle deceleration. The deceleration signal η considered in the previous description may be representative of the normalized quantity above indicated.

The dynamic behavior of the system is hidden in the expression of $F_x$, which depends on the state variables v and ω. The most general expression of $F_x$ is quite complicated, since $F_x$ depends on a huge number of features of the road, tire, and suspension; however, it can be well-approximated as follows:

$$F_x = F_z\mu(\lambda, \beta_t; \theta_r)\,. \qquad (2)$$

In (2) $F_z$ is the vertical force at the tire-road contact point; λ is the longitudinal slip (corresponding to the slip signal of the previous description); $\beta_t$ is the side-slip angle of the wheel; $\theta_r$ is a set of parameters which characterize the shape of μ(·).

With reference to the slide-slip $\beta_t$, further details have been discussed by Kiencke U., Nielsen L. (2000); "Automotive Control Systems for Engine, Driveline, and Vehicle"; Springer Verlag.

Expression (2) can be further elaborated. The vertical load can be simply described as $F_z$=mg, while the longitudinal slip is given by

$$\lambda = \frac{v - \omega r}{v} = 1 - r\frac{\omega}{v} \; . \tag{3}$$

In the rest of the APPENDIX it is assumed that the braking maneuver is performed along a straight line, namely that side-slip angle of the wheel $\beta_t$ is zero. Accordingly, the dependence of $F_x$ on $\beta_t$ will be omitted:

$$F_x = mg\mu(\lambda; \theta_r) = mg\mu\left(\frac{v - \omega r}{v}; \theta_r\right). \tag{4}$$

A simple and widely-used model for $\mu(\cdot)$ is:

$$\mu(\lambda; \theta_r) = \theta_{r1}\left(1 - \exp(-\lambda\theta_{r2})\right) - \lambda\theta_{r3} \; . \tag{5}$$

This model for $\mu(\cdot)$ is described in the above mentioned text "Automotive Control Systems for Engine, Driveline, and Vehicle"; Springer Verlag.

By changing the values of these parameters, many different road conditions can be modeled (as an example, dry asphalt, cobblestone, wet asphalt, snow).

By plugging (4) into (1), we finally obtain the following expression of the quarter-car model:

$$\begin{cases} J\dot{\omega} = rmg\mu\left(\dfrac{v - \omega r}{v}\right) - T_b \\ m\dot{v} = -mg\mu\left(\dfrac{v - \omega r}{v}\right) \end{cases} \tag{6a}$$

As already remarked, in (6a) the state variables are $\omega$ and $v$. Since $\omega$, $v$ and $\lambda$ are linked by the algebraic relationship (3), it is possible to replace the state variable $\omega$ with $\lambda$. This can be obtained by plugging the following two relationships

$$\dot{\lambda} = -\frac{r}{v}\dot{\omega} + \frac{r\omega}{v^2}\dot{v} \; , \qquad \omega = \frac{v}{r}(1 - \lambda)$$

into the first equation of (6a), so obtaining:

$$\begin{cases} \dot{\lambda} = -\dfrac{1}{v}\left(\dfrac{(1 - \lambda)}{m} + \dfrac{r^2}{J}\right)mg\mu(\lambda) + \dfrac{r}{vJ}T_b \\ m\dot{v} = -mg\mu(\lambda) \end{cases} \tag{6b}$$

It is interesting to notice that, despite its simple structure, the design of a feedback controller for (6) is non-trivial. Many reasons concur to make the automatic braking control design a very challenging task: $\mu(\lambda)$ can suffer strong and abrupt changes, $\mu(\lambda)$ is a non-monotone function, the measures of $\lambda$ and $\omega$ are noisy, and the settling time of the system varies with the speed v.

2. ANALYSIS OF THE LINEARIZED MODEL

The first step of our analysis is the computation and discussion of the equilibrium points for (6). Further Explanations concerning the equilibrium points are given in a paper of Guardabassi G., S.M. Savaresi (2001); "Approximate Linearization via Feedback - an Overview" Automatica, (survey paper), vol.27, pp.1-15 and in a paper of Savaresi, S.M, H. Nijmeijer, G.O. Guardabassi (2000); "On the design of approximate nonlinear parametric controllers"; International Journal of Robust and Nonlinear Control, Vol.10, pp.137-155.

First notice that, by setting in (6) $\dot{v}$=0 and $\dot{\omega}$=0, the corresponding equilibrium is given by $\mu$=0 and $T_b$=0. This equilibrium condition is meaningless for the design of a braking regulation loop. The equilibrium points we are interested in are characterized by $\dot{\lambda}$=0 and $\eta=\bar{\eta}$. Starting from these conditions, it is possible to find the set of admissible equilibrium points. Consider the expression (3) of $\lambda$. By setting $\dot{\lambda}$=0 we obtain $\dot{\omega}=\dot{v}\omega/v$. By replacing $\omega$=v/r(1-$\lambda$), $m\dot{v}$= -$mg\mu(\lambda)$, and $\eta=\dot{\omega}r/g$ into this expression, we obtain the analytic expression of the set of admissible equilibrium points in the ($\lambda,\eta$) plane:

$$\bar{\eta} = \left(1-\bar{\lambda}\right)\mu\left(\bar{\lambda}\right). \qquad (7)$$

In order to linearize the model (6) around an equilibrium point, it is assumed that the longitudinal dynamics of the vehicle are much slower than the rotational dynamics of the wheel. Henceforth, $v$ is considered as a slowly-varying parameter. Under this assumption the second equation of (6) is neglected, and the model reduces to a simple 1$^{st}$ order model of the wheel dynamics.

Consider now the variables $\delta T_b = T_b - \bar{T}_b$, $\delta\lambda=\lambda-\bar{\lambda}$, $\delta\dot{\omega}=\dot{\omega}-\bar{\omega}$, $\delta\eta=\eta-\bar{\eta}$, defined around an equilibrium point. Consider also the following definition:

$$\mu_1(\bar{\lambda}) = \partial\mu(\lambda)/\partial\lambda\Big|_{\lambda=\bar{\lambda}}$$

Using the above variables and the definition of $\mu_1(\bar{\lambda})$, the first equation of (6b) can be linearized; the following linear dynamic equation is obtained:

$$\delta\dot{\lambda} = \left[\frac{1}{v}\left(\frac{mg\mu(\bar{\lambda})}{m} - mg\mu_1(\bar{\lambda})\left(\frac{(1-\lambda)}{m}+\frac{r^2}{J}\right)\right)\right]\delta\lambda + \left[\frac{r}{vJ}\right]\delta T_b .$$

The transfer function $G_\lambda(s)$ from $\delta T_b$ to $\delta\lambda$ is given by:

$$G_\lambda(s) = \frac{\left[\dfrac{r}{vJ}\right]}{s+\left[\dfrac{1}{v}\left(g\mu_1(\bar{\lambda})\left((1-\bar{\lambda})+\dfrac{mr^2}{J}\right) - g\mu(\bar{\lambda})\right)\right]} . \qquad (8)$$

The transfer function $G_\eta(s)$ from $\delta T_b$ to $\delta\eta$ can be obtained by linearizing the first equation of (6a):

$$G_\eta(s) = \frac{\dfrac{r}{Jg}\left(s+\left[\dfrac{g}{v}\left(\mu_1(\bar{\lambda})(1-\bar{\lambda})-\mu(\bar{\lambda})\right)\right]\right)}{s+\left[\dfrac{1}{v}\left(g\mu_1(\bar{\lambda})\left((1-\bar{\lambda})+\dfrac{mr^2}{J}\right)-g\mu(\bar{\lambda})\right)\right]} . \qquad (9)$$

The analysis of $G_\lambda(s)$ and $G_\eta(s)$ explains the behavior of the open-loop braking dynamics.

The pole of $G_\lambda(s)$ and $G_\eta(s)$ is given by:

$$s_{pole} = -\frac{1}{v}\left(\mu_1(\bar{\lambda})\left((1-\bar{\lambda})+\frac{mr^2}{J}\right)-\mu(\bar{\lambda})\right)g ;$$

the zero of $G_\eta(s)$ is given by:

$$s_{zero} = -\frac{1}{v}\left(\mu_1(\overline{\lambda})(1-\overline{\lambda}) - \mu(\overline{\lambda})\right)g \; .$$

By studying the pole and the zero locations, the stability and minimum-phase properties of the system around a steady-state condition can be analyzed.
The stability condition for $G_\lambda(s)$ and $G_\eta(s)$ is:

$$\mu_1(\overline{\lambda})\left((1-\overline{\lambda}) + \frac{mr^2}{J}\right) > \mu(\overline{\lambda}) \; .$$

However, note that, since $(1-\overline{\lambda}) << mr^2/J$ and $J\mu(\overline{\lambda})/(mr^2) \approx 0$ rll it can be reduced to $\mu_1(\overline{\lambda}) > 0$. This means that $G_\lambda(s)$ and $G_\eta(s)$ are unstable if the equilibrium point $\overline{\lambda}$ is beyond the peak of $\mu(\lambda)$.
The minimum-phase condition for $G_\eta(s)$ is:

$$\mu_1(\overline{\lambda}) > \frac{\mu(\overline{\lambda})}{(1-\overline{\lambda})} \; .$$

This analysis has shown that the equilibrium condition $\overline{\lambda}$ strongly affects the stability and minimum-phase properties of $G_\lambda(s)$ and $G_\eta(s)$. It also shows that the open-loop wheel dynamics can be unstable. This instability can hardly be handled by non-professional drivers, and represents the main motivation for the design of electronic automatic braking control systems.

It is also interesting to observe that the longitudinal vehicle speed $v$ (considered as a slowly-varying parameter) does not affect these properties; however, is has the obnoxious effect of scaling the transient time of the wheel dynamics.

Moreover, it has to be noticed that the transfer function $G_\varepsilon(s)$, expressed by the relation (a) indicated in the previous description, is related to the $G_\lambda(s)$ and $G_\eta(s)$ by the relation:

$$G_\varepsilon(s) = \alpha \; G_\lambda(s) + (1-\alpha) \; G_\eta(s) \; .$$

## 3. CONTROL STRATEGIES

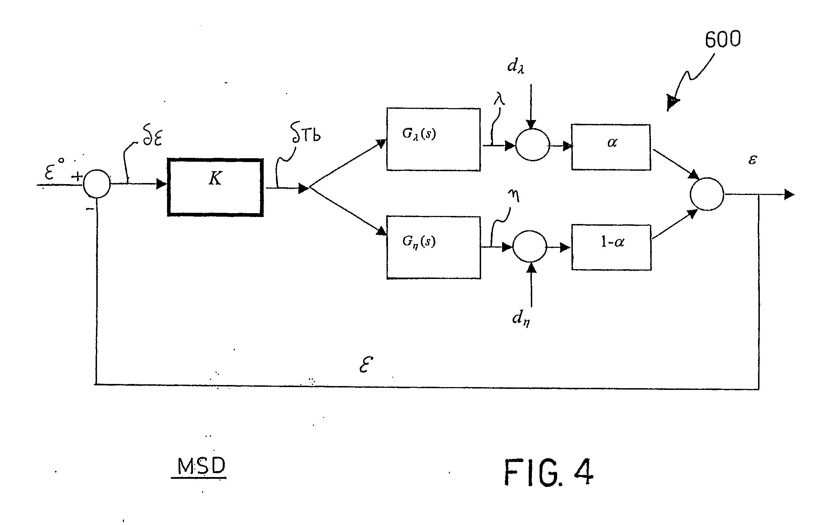

In figure 4, is shown a controller MSD which is a simplified and general structure of the control scheme in accordance with the invention. As already specified the control in accordance with the control method of the invention an output controlled quantity $\varepsilon$ (hereinafter, denominated also variable $\varepsilon$) depending on the wheel deceleration and the wheel slip is defined. The symbol MSD, employed to indicate the controller of figure 4, refers to the control approach implemented by the controller itself which is, as it is clear from the above description, a Mixed Slip-Deceleration control approach.

According to a particular embodiment, the combination of the wheel deceleration and the wheel slip is a convex combination of the two variables $\eta$ and $\lambda$, namely:

$$\varepsilon = \alpha\lambda + (1-\alpha)\eta \quad , \quad \alpha \in [0,1], \tag{10}$$

(according to the invention, in the above relation above $\alpha$ is different from 0 and 1) and to regulate this variable to a set-point constant value $\varepsilon°$. Also $\varepsilon°$ can be interpreted as $\varepsilon° = \alpha\lambda° + (1-\alpha)\eta°$.

Comparing system 100 of figure 1 with the simplified structure of the controller MSD of figure 4, the control block 5 of figure 1 corresponds to the proportional controller K and the system 500 is represented in figure 4 by the block 600.

A control variable $\delta T_b$ is assumed to be driven by the regulation error through the proportional controller, namely $\delta T_b = K\delta\varepsilon$.

Note that the choice of a proportional controller has been made to keep the overall control scheme as simple as possible, in order to easily gain some insight in the behavior of the control system.
The controller MSD displayed in figure 4 has the peculiar feature of embedding the slip-controller ($\alpha = 1$) and the

deceleration-controller ($\alpha$ = 0).

The rest of this section will be structured as follows: first, the extremal cases of slip and deceleration control will be analyzed; then the dynamic properties of the controller will be studied MSD. Finally, the disturbance-attenuation properties of MSD will be compared with those of the slip-controller.

3.1 Slip control: $\alpha$=1

By setting $\alpha$=1 in (10), the controlled variable is the wheel slip $\lambda$. Note that whatever $\bar{\lambda}$ is ($0\leq\bar{\lambda}\leq1$), this regulation scheme guarantees the uniqueness of the steady-state solution. In order to analyze the dynamic properties of the slip control system, it is useful to compute the open-loop transfer function:

$$L_\lambda(s) = \frac{K\left[\dfrac{r}{vJ}\right]}{s+\left[\dfrac{1}{v}\left(g\mu_1(\bar{\lambda})\left((1-\bar{\lambda})+\dfrac{mr^2}{J}\right)-g\mu(\bar{\lambda})\right)\right]}$$

The following stability condition can be worked out:

$$\frac{Kr}{J} > g\mu(\bar{\lambda}) - g\mu_1(\bar{\lambda})\left((1-\bar{\lambda})+\frac{mr^2}{J}\right). \qquad (11)$$

The analysis of (11) reveals that it is always possible to find a value $\bar{K}$ such that, for $K > \bar{K}$, the closed-loop system is stable in every condition (namely for every value of $\bar{\lambda}$ and for every road condition).
This analysis explains why slip-control is considered a very attractive control approach:

- Given a set-point $\bar{\lambda}$, it guarantees the uniqueness of the steady-state solution.
- The choice of $\bar{\lambda}$ is not critical; as a matter of fact, it is easy to find a value of $\bar{\lambda}$ (e.g. $\bar{\lambda}$=0.15) which provides very good results for every road condition. This feature is very appealing since it allows the use of a fixed-structure solution, with no need of on-line identification of the road conditions.
- With a fixed-controller structure, the asymptotic stability of the closed-loop is guaranteed for every value of $\bar{\lambda}$ and for every road condition.

The major drawback of slip-control is that the measurement of $\lambda$ is difficult and unreliable. As a matter of fact the wheel slip computation requires the measurement of the vehicle longitudinal speed, and the vehicle speed can only be estimated by indirect measurements (e.g. by using longitudinal accelerometers and Kalman filtering). With reference to this aspects further details can be found in the paper of Bittanti S., Savaresi S.M. (2000), "On the parametrization and design of an Extended Kalman Filter Frequency Tracker", IEEE Transactions on Automatic Control, vol.45, n.9, pp.1718-1724.

3.2 Deceleration control $\alpha$ = 0

By setting $\alpha$ = 0 in (10), the controlled variable is the normalized linear wheel deceleration $\eta$. The first major drawback of deceleration control: the selection of the set-point $\bar{\eta}$ is very critical, and it is impossible to find an unique value of $\bar{\eta}$ which gives a good compromise for every road condition. As already remarked, note that (if any) the system always has two equilibrium points.

In order to analyze the dynamic properties of the deceleration control system, it is useful to compute the open-loop transfer function:

$$L_\eta(s) = \frac{K\dfrac{r}{Jg}\left(s+\left[\dfrac{g}{v}\left(\mu_1(\bar{\lambda})(1-\bar{\lambda})-\mu(\bar{\lambda})\right)\right]\right)}{s+\left[\dfrac{1}{v}\left(g\mu_1(\bar{\lambda})\left((1-\bar{\lambda})+\dfrac{mr^2}{J}\right)-g\mu(\bar{\lambda})\right)\right]} \, .$$

The following stability condition can be worked out:

$$g\mu_1(\bar{\lambda})\frac{mr^2}{J}+K\frac{r}{J}\left(\mu_1(\bar{\lambda})(1-\bar{\lambda})-\mu(\bar{\lambda})\right)>0 \, . \qquad (12)$$

Note that it is not possible to find a fixed value of K which provides stability for every value of $\bar{\lambda}$ and for every road condition: if K>0, the system can be made asymptotically stable before the friction-curve peak, but it becomes unstable beyond the peak. Henceforth, one of the two equilibrium points is always unstable.
This analysis explains the main limits of deceleration-control:

- The choice of $\bar{\eta}$ is very critical; henceforth, it must be adapted on-line, by means of a detection algorithm of the road conditions.
- With a fixed-controller structure the asymptotic stability of the closed-loop system is not guaranteed.

Due to these major drawbacks, deceleration-control has never been implemented as a classical regulation loop: complex rule-based algorithms based on a set of adjustable thresholds on $\eta$ and its derivative have been traditionally implemented (see for example, the paper of Wellstead P.E., Petit N. B., (1997); "Analysis and Redesign of an Antilock brake system controller"; In Proc. of the Inst. of Elect. Eng., Vol.144, pp.413-426.)
These approaches provide acceptable results if antilocking is the only objective, but can hardly be used for more sophisticated Electronic Stability Control systems.
On the other hand, as already pointed-out, the wheel deceleration can be measured in a very reliable and straightforward manner: it is a low-cost measurement, the noise $d_\eta$ affecting the measure of $\eta$ is almost stationary, and the variance of this noise can be easily managed by properly choosing the precision of the wheel encoder.

3.3 Dynamic properties of the controller MSD: $0<\alpha<1$

The controlled variable is $\varepsilon=\alpha\lambda+(1-\alpha)\eta$, and the set-point is $\varepsilon°=\alpha\lambda°+(1-\alpha)\eta°$. Clearly, by carefully choosing $\alpha$ and $\varepsilon°$, it is possible to guarantee the existence and uniqueness of the steady-state condition; moreover, it is easy to find a fixed value of $\alpha$ and $\varepsilon°$ such that, for every road condition, the equilibrium point provides good performance.
In this case, the open-loop transfer function is given by:

$$L_\varepsilon(s) = K\frac{\alpha\left[\dfrac{r}{vJ}\right]+(1-\alpha)\dfrac{r}{Jg}\left(s+\left[\dfrac{g}{v}\left(\mu_1(\bar{\lambda})(1-\bar{\lambda})-\mu(\bar{\lambda})\right)\right]\right)}{s+\left[\dfrac{1}{v}\left(g\mu_1(\bar{\lambda})\left((1-\bar{\lambda})+\dfrac{mr^2}{J}\right)-g\mu(\bar{\lambda})\right)\right]} \qquad (13)$$

The following stability condition can be worked out: If the parameter $\alpha$ is chosen such that:

$$\alpha_{\min} < \alpha \le 1 \, ,$$

where

$$\alpha_{min} = \max_{\substack{\overline{\lambda} \\ \theta_r}} \left\{ \frac{\left[ \mu(\overline{\lambda};\theta_r) - \mu_1(\overline{\lambda};\theta_r)(1-\overline{\lambda}) \right]}{1 + \left[ \mu(\overline{\lambda};\theta_r) - \mu_1(\overline{\lambda};\theta_r)(1-\overline{\lambda}) \right]} \right\}, \qquad (14)$$

it is always possible to find a valuer $\overline{K}$ such that, for $K > \overline{K}$, the closed-loop system is stable in every condition (for every value of $\overline{\lambda}$ and for every road condition).

Given the previous stability results for slip-control and deceleration-control, the above condition (14) could be somehow expected: we have seen that for stability can be always guaranteed, whereas for $\alpha = 0$ it is impossible to find a unique globally-stable proportional controller. For continuity, these two extremal conditions must be separated by a "threshold" (or lower-bound) on $\alpha$, located between 0 and 1. Expression (14) provides the analytic expression of this lower bound $\alpha_{min}$.

Note that the lower bound is the worst case with respect to the equilibrium point ($\overline{\lambda}$) and the road conditions ($\theta_r$). Also note that the worst condition occurs when $\mu(\overline{\lambda};\theta_r)$ is big and $\mu_1(\overline{\lambda};\theta_r)$ is negative.

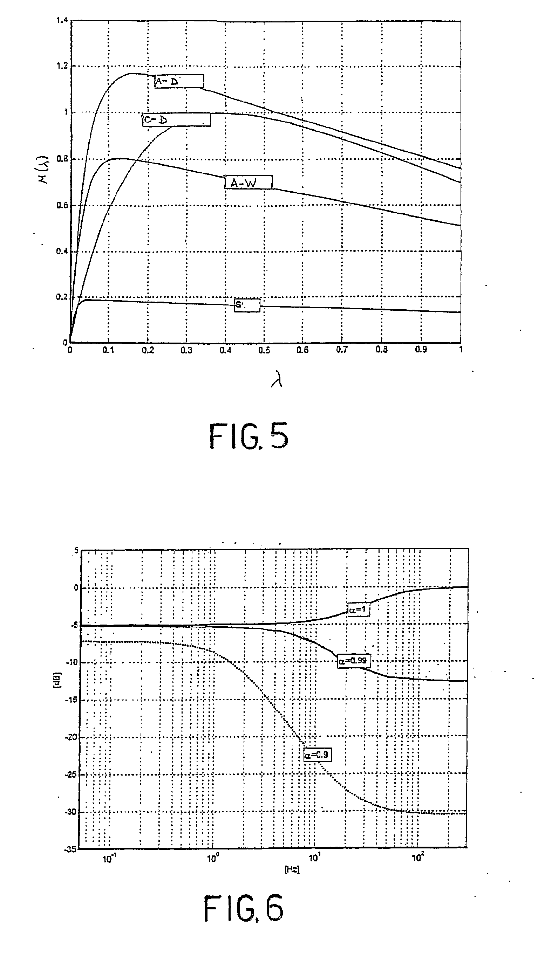

In figure 5, the shape of $\mu(\lambda)$ in different road conditions is depicted:

- curve A-D corresponds to dry asphalt;
- curve C-D corresponds to cobblestone;
- curve A-W corresponds to wet asphalt;
- curve S corresponds to snow.

By inspecting the shapes of the friction curves displayed in figure 5, it is easy to see that:

- the bound on $\alpha$ is more strict when $\overline{\lambda}$ is just beyond the peak of the friction curve;
- the bound on $\alpha$ is more strict on high-grip road conditions;

A rough estimation for $\alpha_{min}$ is $\alpha_{min} \approx 0.6$. Note that this value has a simple and intuitive interpretation: a global stability condition with a fixed-structure of the controller MSD can be guaranteed by simply weighting the slip more than the deceleration.

At the end of this analysis, one can conclude that, if $\alpha_{min} < \alpha < 1$, the strategy of the system of the invention essentially has the same appealing features of slip-control. However, at a first sight, system of the invention also seems to share the major drawback of slip-control (sensitivity to poor slip measurements). This issue will be discussed in the following subsection. It will be shown that (while preserving all the appealing features of slip-control) the system of the invention is characterized by superior noise-attenuation properties.

3.4. Disturbance analysis

Consider the general structure of the controller MSD shown in figure 4. It is easy to see that the disturbance $d_\varepsilon$ affecting the closed-loop controlled variable is given by:

$$D_\varepsilon(s) = \alpha \frac{1}{1 + L_\varepsilon(s;\alpha)} D_\lambda(s) + (1-\alpha) \frac{1}{1 + L_\varepsilon(s;\alpha)} D_\eta(s)$$

where $L_\varepsilon(s)$ is the open-loop transfer function of the control scheme of the controller MSD, given by (13), and $D_\varepsilon(s)$, $D_\lambda(s), D_\eta(s)$ are the Laplace transform of the signals $d_\varepsilon, d_\lambda, d_\eta$, respectively.

Assume now that $d_\lambda$ and $d_\eta$ are zero-mean, uncorrelated, band-limited white noises (they have no spectral content beyond $\overline{\Omega}$). For the sake of simplicity, assume also that the variances of $d_\lambda$ and $d_\eta$ are the same, namely $\text{var}[d_\lambda] = \text{var}[d_\eta] = \Psi$. Under these assumptions, the variance of $d_\varepsilon$ is:

$$\text{var}[d_\varepsilon(\alpha)] = \Psi(\alpha^2 + (1-\alpha)^2) \int_{w=0}^{\overline{\Omega}} \left| \frac{1}{1 + L_\varepsilon(jw;\alpha)} \right|^2 dw \qquad (15)$$

In order to understand if the approach of the controller MSD outperforms the slip-control approach, we must prove that

13

$$\mathrm{var}\big[d_\varepsilon(\alpha)\big] < \mathrm{var}\big[d_\varepsilon(1)\big], \quad \alpha_{\min} < \alpha < 1 \; . \qquad (16)$$

Note that (15) is the product of two terms, both depending on $\alpha$.

The analysis of the first term $(\alpha^2+(1-\alpha)^2)$ is very simple. This function is maximum for $\alpha=1$ (slip control) and $\alpha=0$ (deceleration control). The controller MSD, which operates with $0<\alpha<1$, hence provides a noise attenuation which - considering this term only - can halve the noise variance on the controlled variable. In particular, at $\alpha=\alpha_{\min}=0.6$, the attenuation factor given by this term is about 0.52.

The analysis of second factor of (15) is more complicated since its explicit expression cannot be analytically computed. Note that this term is the integral (over the frequency interval $[0,\overline{\Omega}]$) of the squared magnitude of the frequency response of the closed-loop sensitivity function; a clear indication on the effect of $\alpha$ on this term hence can be drawn by the analysis of the sensitivity function. The sensitivity transfer function can be condensed in four basic features: Zero, Pole, Low-Frequency (LF) gain and High-Frequency (HF) gain.

$$\mathrm{Zero:} \quad -\left[\frac{1}{v}\left(g\mu_1(\overline{\lambda})\left((1-\overline{\lambda})+\frac{mr^2}{J}\right)-g\mu(\overline{\lambda})\right)\right];$$

$$\mathrm{Pole:} \quad \frac{\left[\frac{1}{v}\left(g\mu_1(\overline{\lambda})\left((1-\overline{\lambda})+\frac{mr^2}{J}\right)-g\mu(\overline{\lambda})+K(1-\alpha)\frac{r}{J}\left(\mu_1(\overline{\lambda})(1-\overline{\lambda})-\mu(\overline{\lambda})\right)+\frac{K\alpha r}{J}\right)\right]}{\left[1+K(1-\alpha)\frac{r}{Jg}\right]};$$

$$\mathrm{LF\ gain:} \quad \frac{g\mu_1(\overline{\lambda})\left((1-\overline{\lambda})+\frac{mr^2}{J}\right)-g\mu(\overline{\lambda})}{g\mu_1(\overline{\lambda})\left((1-\overline{\lambda})+\frac{mr^2}{J}\right)-g\mu(\overline{\lambda})+K(1-\alpha)\frac{r}{J}\left(\mu_1(\overline{\lambda})(1-\overline{\lambda})-\mu(\overline{\lambda})\right)+\frac{K\alpha r}{J}};$$

$$\mathrm{HF\ gain:} \quad \frac{1}{\left[1+K(1-\alpha)\frac{r}{Jg}\right]} \; .$$

From the analysis of these four features with respect to $\alpha$ (assuming high values of K), the following remarks can be done:

- The Zero is fixed, and does not depend on $\alpha$.
- The Pole shifts backwards as $\alpha$ decreases;
- The LF gain is only weakly affected by $\alpha$ ;
- The HF-gain strongly decreases as $\alpha$ decreases.

The characteristics above listed can be easily understood by means of figure 6, where the magnitude of the frequency response of the sensitivity function is displayed for three different values of $\alpha$. Particularly, figure 6 shows a Bode-plots of (26) when $\overline{\lambda}=0.05$ (dry asphalt condition, $v=30m/s$, and K=10000). The magnitude on the ordinate axis is expressed in dB versus the frequency expressed in Hz.

All the characteristics outlined above are clearly visible in this picture. Similar plots can be obtained for different road conditions and different longitudinal vehicle speeds.

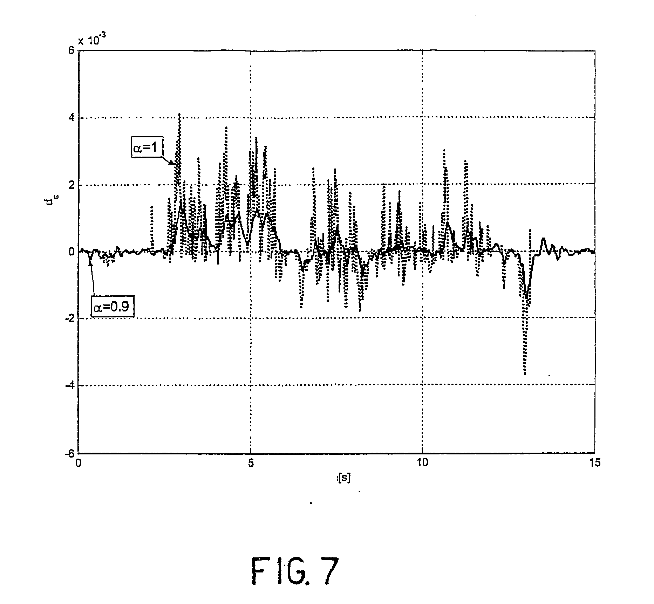

Finally, this noise-attenuation effect can be appreciated by the simulation results displayed in figure 7, where the residual output noise $d_\varepsilon$ is displayed, in the case of $\alpha=1$, dotted line, and $\alpha=0.9$, continuous line, (dry asphalt condition, $\overline{\lambda}=0.05$, $v=30m/s$, K=10000). It is clear (the noise variance is reduced by a factor 5) the advantage of using a control strategy of the controller MSD. This result has been obtained by using the measurement errors on $\lambda$ and $\eta$ registered during an experiment on a real vehicle.

**Claims**

1. Automatic braking control system (100) for a vehicle comprising:

   - a control block (5) for receiving an error signal ($\delta\varepsilon$) and providing an output signal ($S_{Tb}$) representative of a control quantity (Tb), the output signal allowing to act on a vehicle braking apparatus (BRK-A),
   - an estimation and processing block (300) for generating a controlled signal ($\varepsilon$),
   - a processing block (2) for generating said error signal ($\delta\varepsilon$) from a reference signal (s°) and the controlled signal ($\varepsilon$),
   the control block (5) being of the modulating type and the estimation and processing block (300) is so as to produce a controlled signal ($\varepsilon$),
   **characterized in that**:

   the estimation and processing block (300) is configured to estimate a vehicle wheel slip ($\lambda$) and to compute a vehicle wheel deceleration ($\eta$), and to generate said controlled signal ($\varepsilon$) as a linear combination of a first signal corresponding to the estimated vehicle wheel slip ($\lambda$) and a second signal corresponding to the computed vehicle wheel deceleration ($\eta$), said linear combination being performed according to a first weight applied to the first signal and a second weight applied to the second signal, the first and second weight being fixed coefficients different from 0.

2. System (100) according to claim 1, wherein the first weight ($\alpha$) and the second weight ($1-\alpha$) are positive coefficients such as their sum is 1, and the first weight ($\alpha$) is larger than the second weight ($1-\alpha$).

3. System (100) according to claim 1, wherein the control block (5) is a proportional-integral-derivative controller.

4. System (100) according to claim 1, wherein the control block (5) is digital block implemented in the discrete-time domain.

5. System (100) according to claim 1, wherein said control block (5) is configured on the basis of a mathematical model describing a system including the vehicle wheel and the vehicle.

6. System (100) according to claim 1, further comprising an actuator operating on the vehicle braking apparatus and on the basis of said output signal.

7. System (100) according to claim 1, comprising said braking apparatus and wherein said braking apparatus is suitable for brake-by-wire automotive applications.

8. System (100) according to claim 1, wherein said braking apparatus is of one type belonging to the group: electro-hydraulic brake, electro-mechanical brake.

9. System (100) according to claim 1, wherein said estimation and processing block (300) further includes a plurality of sensors (S1-S4) associated with each vehicle wheel for measuring a corresponding plurality of wheel speeds and generating respective speed signals ($v_{w1}$-$v_{w4}$).

10. System (100) according to claim 9, wherein said estimation and processing block (300) further comprises a processing unit (ECU) for estimating a longitudinal vehicle speed from said plurality of speed signals ($v_{w1}$-$v_{w4}$).

11. System (100) according to claim 10, wherein said estimating and processing block (300) is suitable to estimate the vehicle wheel slip ($\lambda$) from the plurality of speed signals and the longitudinal estimated vehicle speed.

12. System (100) according to claim 11, wherein said estimation and processing block (300) is suitable to compute said vehicle wheel deceleration ($\eta$) from a corresponding wheel speed signal of said plurality.

13. System (100) according to claim 1 or 2, wherein said combination is a convex combination.

14. System (100) according to claim 1, wherein said control quantity (Tb) is a braking torque to be applied by the braking apparatus.

15. System (100) according to claim 1, further including a switching-logic block (SW-L) for selectively connecting/disconnecting the braking apparatus to/from the control block (5) and to/from a terminal providing a further signal representative of the torque requested by the vehicle driver.

16. System (100) according to claim 1, wherein said system is an anti-lock braking system and the control block (5) is configured in such a way that said output signal allows the brake apparatus to substantially prevent the vehicle wheel from locking.

17. A method for operating an automatic braking control system (100) of a vehicle, comprising the steps of:

- computing a deceleration of a vehicle wheel ($\eta$) and estimating a slip ($\lambda$) of the vehicle wheel;
- generating a controlled signal ($\varepsilon$) depending on said deceleration ($\eta$) and slip ($\lambda$) of the vehicle wheel,
- generating an error signal ($\delta\varepsilon$) from a reference signal ($\varepsilon°$) and the controlled signal ($\varepsilon$),
- controlling a braking apparatus (BRK-A) of the vehicle by processing the error signal to provide an output signal ($S_{Tb}$) representative of a control quantity (Tb), the output signal being generated by a modulating controller,

wherein said step of generating the controlled signal ($\varepsilon$) comprises a step of performing a linear combination of a first signal corresponding to the estimated vehicle wheel slip ($\lambda$) and a second signal corresponding to the computed vehicle wheel deceleration ($\eta$), said linear combination being performed according to a first weight applied to the first signal and a second weight applied to the second signal, the first and second weight being fixed coefficients different from 0.

18. A method according to claim 17, wherein the first weight ($\alpha$) and the second weight ($1-\alpha$) are positive coefficients such as their sum is 1, and the first weight ($\alpha$) is larger than the second weight $1-\alpha$).

19. A method according to claim 17, wherein said step of controlling include the step of performing a proportional-integral-derivative control.

20. A method according to claim 17, wherein said braking apparatus is suitable for brake-by-wire automotive applications.

21. A method according to claim 17, wherein said control quantity (Tb) is a braking torque to be applied by the braking apparatus.

22. A method according to claim 17, wherein said estimation step includes measuring a plurality of wheel speeds and generating respective speed signals ($v_{w1}$-$v_{w4}$).

23. A method according to claim 17, further comprising a step of obtaining a further signal representative of longitudinal vehicle speed (v) from said plurality of speed signals ($v_{w1}$-$v_{w4}$).

24. A method according to claims 17 and 23, wherein said estimating step comprises the steps of:

- processing the plurality of speed signals and the longitudinal vehicle speed signal for obtaining the wheel slip ($\lambda$) signal,
- processing a speed signal of said plurality for obtaining said wheel deceleration ($\eta$) signal.

25. A method according to claim 24, wherein the slip signal is obtained by implementing an estimation algorithm based on the measure of a vehicle longitudinal acceleration together with said plurality of speed signals ($v_{w1}$-$v_{w4}$).

26. A method according to claim 24, wherein said output signal substantially prevents the vehicle wheel from locking.

**Patentansprüche**

1. Automatisches Brems-Steuer-/Regelsystem (100) für ein Fahrzeug, umfassend:

- einen Steuer-/Regelblock (5), um ein Fehlersignal ($\delta\varepsilon$) zu empfangen und ein Ausgangssignal (Stb) zu liefern, das eine Steuer-/Regelgröße (Tb) darstellt, wobei es das Ausgangssignal ermöglicht, auf eine Fahrzeug-Bremsvorrichtung (BRK-A) einzuwirken,

- einen Berechnungs- und Verarbeitungsblock (300), um ein gesteuertes/geregeltes Signal ($\varepsilon$) zu erzeugen,
- einen Verarbeitungsblock (2), um das Fehlersignal ($\delta\varepsilon$) aus einem Referenzsignal ($\varepsilon°$) und dem gesteuerten/geregelten Signal ($\varepsilon$) zu erzeugen,

wobei der Steuer-/Regelblock (5) vom Modulationstyp ist und der Berechnungs- und Verarbeitungsblock (300) so geartet ist, dass er ein gesteuertes/geregeltes Signal ($\varepsilon$) erzeugt,
**dadurch gekennzeichnet, dass**
der Berechnungs- und Verarbeitungsblock (300) dafür ausgelegt ist, einen Fahrzeugrad-Schlupf ($\lambda$) zu berechnen und eine Fahrzeugrad-Verlangsamung (n) zu errechnen, und das gesteuerte/geregelte Signal ($\varepsilon$) als eine lineare Kombination eines ersten Signals entsprechend dem berechneten Fahrzeugrad-Schlupf ($\lambda$) und eines zweiten Signals entsprechend der ermittelten Fahrzeugrad-Verlangsamung (n) zu erzeugen, wobei die lineare Kombination gemäß einer ersten Gewichtung, die auf das erste Signal angewendet wird, und einer zweiten Gewichtung, die auf das zweite Signal angewendet wird, ausgeführt wird, wobei die erste und die zweite Gewichtung festgelegte Koeffizienten ungleich 0 sind.

2. System (100) nach Anspruch 1, wobei die erste Gewichtung ($\alpha$) und die zweite Gewichtung ($1-\alpha$) positive Koeffizienten sind, so dass ihre Summe 1 ist, und wobei die erste Gewichtung ($\alpha$) größer als die zweite Gewichtung ($1-\alpha$) ist.

3. System (100) nach Anspruch 1, wobei der Steuer-/Regelblock (5) ein PID-Regler ist.

4. System (100) nach Anspruch 1, wobei der Steuer-/Regelblock (5) als Digitalblock im Diskret-Zeitbereich umgesetzt ist.

5. System (100) nach Anspruch 1, wobei der Steuer-/Regelblock (5) auf Basis eines mathematischen Modells, welches ein System beschreibt, das das Fahrzeugrad und das Fahrzeug umfasst, aufgebaut ist.

6. System (100) nach Anspruch 1, ferner umfassend einen Aktuator, der die Fahrzeug-Bremsvorrichtung betreibt und auf der Basis des Ausgangssignals arbeitet.

7. System (100) nach Anspruch 1, umfassend die Bremsvorrichtung, und wobei die Bremsvorrichtung für Brake-by-Wire Fahrzeuganwendungen geeignet ist.

8. System (100) nach Anspruch 1, wobei die Bremsvorrichtung von einem Typ ist, der zu folgender Gruppe gehört:

    elektro-hydraulische Bremse, elektro-mechanische Bremse.

9. System (100) nach Anspruch 1, wobei der Berechnungs- und Verarbeitungsblock (300) ferner eine Mehrzahl an Sensoren (S1-S4) umfasst, die jedem Fahrzeugrad zugeordnet sind, um eine entsprechende Mehrzahl an Raddrehzahlen zu messen und zugehörige Drehzahlsignale ($v_{w1}$-$v_{w4}$) zu erzeugen.

10. System (100) nach Anspruch 9, wobei der Berechnungs- und Verarbeitungsblock (300) ferner eine Verarbeitungseinheit (ECU) umfasst, um aus der Mehrzahl an Drehzahlsignalen ($v_{w1}$-$v_{w4}$) eine Fahrzeuggeschwindigkeit in Längsrichtung zu berechnen.

11. System (100) nach Anspruch 10, wobei der Berechnungs- und Verarbeitungsblock (300) dazu geeignet ist, den Fahrzeugrad-Schlupf ($\lambda$) aus der Mehrzahl der Drehzahlsignale und der berechneten Fahrzeuggeschwindigkeit in Längsrichtung zu berechnen.

12. System (100) nach Anspruch 11, wobei der Berechnungs- und Verarbeitungsblock (300) dazu geeignet ist, die Fahrzeugrad-Verlangsamung (n) aus einem entsprechenden Raddrehzahl-Signal der Mehrzahl an Drehzahlsignalen zu errechnen.

13. System (100) nach Anspruch 1 oder 2, wobei die Kombination eine Konvexkombination ist.

14. System (100) nach Anspruch 1, wobei die Steuer-/Regelgröße (Tb) ein Bremsmoment ist, das mittels der Bremsvorrichtung anzuwenden ist.

15. System (100) nach Anspruch 1, ferner umfassend einen Schalt-Logik-Block (SW-L), um die Bremsvorrichtung selektiv mit/von dem Steuer-/Regelblock (5) und mit/von einem Anschluss, der ein weiteres Signal entsprechend dem vom Fahrzeugführer angeforderten Moment bereitstellt, zu verbinden/trennen.

16. System (100) nach Anspruch 1, wobei das System ein Antiblockier-Bremssystem ist und der Steuer-/Regelblock (5) derart ausgelegt ist, dass das Ausgangssignal der Bremsvorrichtung erlaubt, im Wesentlichen das Blockieren des Fahrzeugrades zu verhindern.

17. Verfahren, ein automatisches Brems-Steuer-/Regelsystem (100) eines Fahrzeugs zu betreiben, folgende Schritte umfassend:

   - Errechnen einer Verlangsamung (n) eines Fahrzeugrades und Berechnen eines Schlupfs ($\lambda$) des Fahrzeugrades;
   - Erzeugen eines gesteuerten/geregelten Signals ($\varepsilon$), das von der Verlangsamung (n) und von dem Schlupf ($\lambda$) des Fahrzeugrades abhängig ist,
   - Erzeugen eines Fehlersignals ($\delta\varepsilon$) aus einem Referenzsignal ($\varepsilon°$) und dem gesteuerten/geregelten Signal ($\varepsilon$),
   - Steuern/Regeln einer Bremsvorrichtung (BRK-A) des Fahrzeugs durch Verarbeiten des Fehlersignals, um ein Ausgangssignal ($S_{Tb}$), das eine Steuer-/Regelgröße (Tb) darstellt, bereitzustellen, wobei das Ausgangssignal von einer Modulations-Steuer-/Regeleinrichtung erzeugt wird,

   wobei der Schritt des Erzeugens des gesteuerten/geregelten Signals ($\varepsilon$) einen Schritt umfasst, in welchem eine lineare Kombination eines ersten Signals entsprechend dem berechneten Fahrzeugrad-Schlupf ($\lambda$) und eines zweiten Signals entsprechend der errechneten Fahrzeugrad-Verlangsamung (n) durchgeführt wird, wobei die lineare Kombination gemäß einer ersten Gewichtung, die auf das erste Signal angewendet wird, und einer zweiten Gewichtung, die auf das zweite Signal angewendet wird, ausgeführt wird, wobei die erste und die zweite Gewichtung festgelegte Koeffizienten ungleich 0 sind.

18. Verfahren nach Anspruch 17, wobei die erste Gewichtung ($\alpha$) und die zweite Gewichtung ($1-\alpha$) positive Koeffizienten sind, so dass ihre Summe 1 ist, und wobei die erste Gewichtung ($\alpha$) größer als die zweite Gewichtung ($1-\alpha$) ist.

19. Verfahren nach Anspruch 17, wobei der Schritt des Steuerns/Regelns den Schritt des Ausführens einer PID-Regelung umfasst.

20. Verfahren nach Anspruch 17, wobei die Bremsvorrichtung für Brake-by-Wire Fahrzeuganwendungen geeignet ist.

21. Verfahren nach Anspruch 17, wobei die Steuer-/Regelgröße (Tb) ein Bremsmoment ist, das mittels der Bremsvorrichtung anzuwenden ist.

22. Verfahren nach Anspruch 17, wobei der Berechnungsschritt das Messen einer Mehrzahl an Raddrehzahlen und das Erzeugen entsprechender Drehzahlsignale ($v_{w1}$-$v_{w4}$) umfasst.

23. Verfahren nach Anspruch 17, ferner umfassend einen Schritt, in welchem ein weiteres Signal, das die Fahrzeuggeschwindigkeit ($\hat{v}$) in Längsrichtung darstellt, aus der Mehrzahl an Drehzahlsignalen ($v_{w1}$-$v_{w4}$) erhalten wird.

24. Verfahren nach den Ansprüchen 17 und 23, wobei der Berechnungsschritt folgende Schritte umfasst:

   - Verarbeiten der Mehrzahl an Drehzahlsignalen und des Fahrzeuggeschwindigkeits-Signals in Längsrichtung, um das Signal des Radschlupfs ($\lambda$) zu erhalten.
   - Verarbeiten eines Drehzahlsignals der Mehrzahl an Drehzahlsignalen, um das Signal der Radverlangsamung ($\eta$) zu erhalten.

25. Verfahren nach Anspruch 24, wobei das Schlupf-Signal durch das Anwenden eines Berechnungsalgorithmus erhalten wird, welcher auf dem Messen einer Fahrzeugbeschleunigung in Längsrichtung zusammen mit der Mehrzahl an Drehzahlsignalen ($v_{w1}$-$v_{w4}$) basiert.

26. Verfahren nach Anspruch 24, wobei das Ausgangssignal im Wesentlichen das Blockieren des Fahrzeugrades verhindert.

**EP 1 851 095 B1**

**Revendications**

1.  Système de commande de freinage automatique (100) pour un véhicule comprenant :

    - un bloc de commande (5) pour recevoir un signal d'erreur ($\delta\varepsilon$) et fournir un signal de sortie ($S_{Tb}$) représentatif d'une quantité de commande (Tb), le signal de sortie permettant d'agir sur un appareil de freinage de véhicule (BRK-A),
    - un bloc d'estimation et de traitement (300) pour générer un signal commandé ($\varepsilon$),
    - un bloc de traitement (2) pour générer ledit signal d'erreur ($\delta\varepsilon$) à partir d'un signal de référence ($\varepsilon°$) et du signal commandé ($\varepsilon$),

    le bloc de commande (5) étant du type de modulation et le bloc d'estimation et de traitement (300) servant à produire un signal commandé ($\varepsilon$),
    **caractérisé en ce que** :

    le bloc d'estimation et de traitement (300) est configuré pour estimer un dérapage de roue de véhicule ($\lambda$) et pour calculer une décélération de roue de véhicule ($\eta$), et pour générer ledit signal commandé ($\varepsilon$) en tant que combinaison linéaire d'un premier signal correspondant au dérapage de roue de véhicule ($\lambda$) estimé et d'un deuxième signal correspondant à la décélération de roue de véhicule ($\eta$) calculée, ladite combinaison linéaire étant effectuée conformément à un premier coefficient de pondération appliqué au premier signal et à un deuxième coefficient de pondération appliqué au deuxième signal, les premier et deuxième coefficients de pondération étant des coefficients fixés différents de 0.

2.  Système (100) selon la revendication 1, dans lequel le premier coefficient de pondération ($\alpha$) et le deuxième coefficient de pondération ($1-\alpha$) sont des coefficients positifs tels que leur somme est égale à 1, et le premier coefficient de pondération ($\alpha$) est supérieur au deuxième coefficient de pondération ($1-\alpha$).

3.  Système (100) selon la revendication 1, dans lequel le bloc de commande (5) est un contrôleur proportionnel-intégral-dérivé.

4.  Système (100) selon la revendication 1, dans lequel le bloc de commande (5) est un bloc numérique mis en oeuvre dans le domaine temporel discret.

5.  Système (100) selon la revendication 1, dans lequel ledit bloc de commande (5) est configuré sur la base d'un modèle mathématique décrivant un système comprenant la roue de véhicule et le véhicule.

6.  Système (100) selon la revendication 1, comprenant en outre un actionneur agissant sur l'appareil de freinage de véhicule et sur la base dudit signal de sortie.

7.  Système (100) selon la revendication 1, comprenant ledit appareil de freinage et dans lequel ledit appareil de freinage est approprié pour des applications automobiles de freinage à commande électronique.

8.  Système (100) selon la revendication 1, dans lequel ledit appareil de freinage est d'un type appartenant au groupe : de frein électrohydraulique, de frein électromécanique.

9.  Système (100) selon la revendication 1, dans lequel ledit bloc d'estimation et de traitement (300) comprend en outre une pluralité de capteurs (S1 à S4) associés à chaque roue de véhicule pour mesurer une pluralité correspondante de vitesses de roue et générer des signaux de vitesse ($v_{w1}$ à $v_{w4}$) respectifs.

10. Système (100) selon la revendication 9, dans lequel ledit bloc d'estimation et de traitement (300) comprend en outre une unité de traitement (ECU) pour estimer une vitesse de véhicule longitudinale à partir de ladite pluralité de signaux de vitesse ($v_{w1}$ à $v_{w4}$).

11. Système (100) selon la revendication 10, dans lequel ledit bloc d'estimation et de traitement (300) est approprié pour estimer le dérapage de roue de véhicule ($\lambda$) à partir de la pluralité de signaux de vitesse et de la vitesse de véhicule longitudinale estimée.

12. Système (100) selon la revendication 11, dans lequel ledit bloc d'estimation et de traitement (300) est approprié pour calculer ladite décélération de roue de véhicule (η) à partir d'un signal de vitesse de roue correspondant de ladite pluralité.

**13.** Système (100) selon la revendication 1 ou 2, dans lequel ladite combinaison est une combinaison convexe.

**14.** Système (100) selon la revendication 1, dans lequel ladite quantité de commande (Tb) est un couple de freinage à appliquer par l'appareil de freinage.

**15.** Système (100) selon la revendication 1, comprenant en outre un bloc logique de commutation (SW-L) pour connecter/déconnecter de manière sélective l'appareil de freinage au/du bloc de commande (5) et à/d'une borne fournissant un signal supplémentaire représentatif du couple demandé par le conducteur du véhicule.

**16.** Système (100) selon la revendication 1, dans lequel ledit système est un système de freinage à antiblocage et le bloc de commande (5) est configuré de manière à ce que ledit signal de sortie permette à l'appareil de freinage d'éviter sensiblement un blocage de la roue de véhicule.

**17.** Procédé pour mettre en oeuvre un système de commande de freinage automatique (100) d'un véhicule, comprenant les étapes :

- de calcul d'une décélération d'une roue de véhicule (η) et d'estimation d'un dérapage (λ) de la roue de véhicule ;
- de génération d'un signal commandé (ε) en fonction de ladite décélération (η) et dudit dérapage (λ) de la roue de véhicule ;
- de génération d'un signal d'erreur (δε) à partir d'un signal de référence (ε°) et du signal commandé (ε) ;
- de commande d'un appareil de freinage (BRK-A) du véhicule en traitant le signal d'erreur pour fournir un signal de sortie (S$_{Tb}$) représentatif d'une quantité de commande (Tb), le signal de sortie étant généré par un contrôleur de modulation,

dans lequel ladite étape de génération du signal commandé (ε) comprend une étape d'exécution d'une combinaison linéaire d'un premier signal correspondant au dérapage de roue de véhicule (λ) estimé et d'un deuxième signal correspondant à la décélération de roue de véhicule (η) calculée, ladite combinaison linéaire étant effectuée conformément à un premier coefficient de pondération appliqué au premier signal et à un deuxième coefficient de pondération appliqué au deuxième signal, les premier et deuxième coefficients de pondération étant des coefficients fixés différents de 0.

**18.** Procédé selon la revendication 17, dans lequel le premier coefficient de pondération (α) et le deuxième coefficient de pondération (1-α) sont des coefficients positifs tels que leur somme est égale à 1, et le premier coefficient de pondération (α) est supérieur au deuxième coefficient de pondération (1-α).

**19.** Procédé selon la revendication 17, dans lequel ladite étape de commande comprend l'étape d'exécution d'une commande proportionnelle-intégrale-dérivée.

**20.** Procédé selon la revendication 17, dans lequel ledit appareil de freinage est approprié pour des applications automobiles de freinage à commande électronique.

**21.** Procédé selon la revendication 17, dans lequel ladite quantité de commande (Tb) est un couple de freinage à appliquer par l'appareil de freinage.

**22.** Procédé selon la revendication 17, dans lequel ladite étape d'estimation comprend la mesure d'une pluralité de vitesses de roue et la génération de signaux de vitesse (v$_{w1}$ à v$_{w4}$) respectifs.

**23.** Procédé selon la revendication 17, comprenant en outre une étape d'obtention d'un signal supplémentaire représentatif de la vitesse de véhicule longitudinale (v) à partir de ladite pluralité de signaux de vitesse (v$_{w1}$ à v$_{w4}$).

**24.** Procédé selon les revendications 17 et 23, dans lequel ladite étape d'estimation comprend les étapes :

- de traitement de la pluralité de signaux de vitesse et du signal de vitesse de véhicule longitudinale pour obtenir un signal de dérapage de roue (λ) ;
- de traitement d'un signal de vitesse de ladite pluralité pour obtenir ledit signal de décélération de roue (η).

**25.** Procédé selon la revendication 24, dans lequel le signal de dérapage est obtenu en mettant en oeuvre un algorithme d'estimation basé sur la mesure d'une accélération longitudinale de véhicule avec ladite pluralité de signaux de vitesse ($v_{w1}$ à $v_{w4}$).

**26.** Procédé selon la revendication 24, dans lequel ledit signal de sortie empêche sensiblement un blocage de la roue de véhicule.

FIG.1

FIG. 2

EP 1 851 095 B1

EP 1 851 095 B1

FIG. 3

MSD

FIG. 4

EP 1 851 095 B1

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• DE 19926672

### Non-patent literature cited in the description

• **KIENCKE U. ; NIELSEN L.** Automotive Control Systems for Engine, Driveline, and Vehicle. Springer Verlag, 2000
• **GUARDABASSI G. ; S.M. SAVARE.** Approximate Linearization via Feedback - an Overview. *Automatica,* 2001, vol. 27, 1-15
• **SAVARESI, S.M ; H. NIJMEIJER ; G.O. GUARDABASSI.** On the design of approximate nonlinear parametric controllers. *International Journal of Robust and Nonlinear Control,* 2000, vol. 10, 137-155
• **BITTANTI S. ; SAVARESI S.M.** On the parametrization and design of an Extended Kalman Filter Frequency Tracker. *IEEE Transactions on Automatic Control,* 2000, vol. 45 (9), 1718-1724
• **WELLSTEAD P.E. ; PETIT N. B.** Analysis and Redesign of an Antilock brake system controller. *Proc. of the Inst. of Elect. Eng.,* 1997, vol. 144, 413-426